**Europäisches Patentamt**

**European Patent Office**

**Office européen des brevets**

(19)

(11) Numéro de publication : **0 351 420 B1**

(12)

# FASCICULE DE BREVET EUROPEEN

(45) Date de publication du fascicule du brevet :
**01.07.92 Bulletin 92/27**

(51) Int. Cl.⁵ : **F02B 75/12, F02D 15/04**

(21) Numéro de dépôt : **88908760.7**

(22) Date de dépôt : **14.10.88**

(86) Numéro de dépôt international :
**PCT/LU88/00001**

(87) Numéro de publication internationale :
**WO 89/03476 20.04.89 Gazette 89/09**

(54) **MOTEUR A ALLUMAGE PAR COMPRESSION A RAPPORT VOLUMETRIQUE VARIABLE.**

(30) Priorité : **16.10.87 LU 87021**

(43) Date de publication de la demande :
**24.01.90 Bulletin 90/04**

(45) Mention de la délivrance du brevet :
**01.07.92 Bulletin 92/27**

(84) Etats contractants désignés :
**BE CH DE FR GB IT LI NL SE**

(56) Documents cités :
**DE-A- 389 196**
**US-A- 3 961 607**
**US-A- 4 157 080**
**US-A- 4 170 970**
**US-A- 4 625 684**

(73) Titulaire : **VAN AVERMAETE, Gilbert Lucien Charles Henri Louis**
**2, Um Bourbierg**
**L-3335 Hellange (LU)**

(72) Inventeur : **VAN AVERMAETE, Gilbert Lucien Charles Henri Louis**
**2, Um Bourbierg**
**L-3335 Hellange (LU)**

(74) Mandataire : **Dellicour, Paul**
**Office de Brevets E. Dellicour rue Fabry 18/012**
**B-4000 Liège (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 351 420 B1

## Description

La présente invention concerne un moteur à combustion interne par auto-inflammation tel que décrit dans le brevet luxembourgeois n° 86 506 pour un moteur à cycle à combustion mixte à allumage commandé, qui comporte un regroupement axial des trois cylindres réunis en triangle permettant une centralisation parallèle des deux vilebrequins dans le carter cylindre.

Le but de la présente invention concerne les moyens de réalisation d'un moteur à combustion interne par auto-inflammation pouvant fonctionner à bas taux de compression et haut taux de suralimentation. Ces moyens permettent l'introduction dans le cylindre d'une plus grande quantité d'air autorisant la combustion d'un poids plus élevé de combustible sans augmentation de la température maximum ; de ces moyens découle un accroissement de la pression moyenne sans devoir accroître la pression maximum. Des moyens de démarrage et de fonctionnement du moteur sont aussi prévus sans l'appoint d'une pression de suralimentation.

Par le brevet EP-A-O 156 543 on connaît un moteur à combustion interne comprenant une paire de premier et second cylindre, une chambre de combustion reliant entre eux lesdits cylindres à l'extrémité de leur tête et des premier et second pistons de travail respectifs pouvant se déplacer dans lesdits cylindres, le premier piston servant aux phases d'admission, compression, détente et échappement et l'injecteur de carburant étant situé dans le petit cylindre.

Dans le moteur décrit dans ce document la chambre de combustion contient des moyens d'allumage à fonctionnement continu sous la forme d'une masse poreuse ou similaire en matériel durable résistant à la chaleur, c'est-à-dire un matériel catalytique.

L'utilisation d'un, catalyseur oblige à augmenter inconsidérément l'espace mort ou espace nuisible, ce qui a pour effet de devoir limiter le rapport volumétrique et, par conséquent, le taux de compression. En outre de la nécessité de modifier le temps d'ouverture de la soupape d'admission, nécessaire à un certain laminage de l'air d'admission, cela a pour effet une diminution du rendement volumétrique du moteur, du fait de devoir juxtaposer le mélange nécessaire à la combustion à des endroits, qui varient avec le régime du moteur.

Un moteur à allumage par compression, à rapport volumétrique variable, suivant l'invention ne nécessite pas de catalyseur dans l'espace mort ou chambre de combustion. Il comporte un groupement axial de deux cylindres réunis parallèlement côte-à-côte avec deux vilebrequins dans le carter cylindre, chaque cylindre comportant un piston correspondant, le premier piston servant aux phases d'admission, compression, détente et échappement et l'injecteur de carburant étant situé dans le second cylindre, le premier piston dépendant via une bielle du premier vilebrequin situé dans le carter cylindre, le premier vilebrequin est relié par une transmission au second vilebrequin via les moyens de l'organe du coupleur situé radialement ou axialement à l'intérieur ou à l'extérieur du carter cylindre le moteur comportant en outre un moyen de suralimentation (9), et est caractérisé en ce que des moyens sont prévus pour synchroniser et automatiser le déplacement axial du chariot du coupleur en fonction de la pression de suralimentation.

L'invention s'applique aussi bien aux moteurs à cycle à deux ou quatre temps.

On a représenté, à titre d'exemple, un mode de réalisation préféré de l'invention, particulièrement relatif à un moteur à cycle à deux temps. Il pourra, de toute façon, être bien compris à l'aide du complément de description qui suit ainsi que des dessins ci-annexés dans lesquels :

– la figure 1 est une vue partielle en deux coupes brisées A-A de la partie transversale d'un moteur deux temps montrant à l'avant plan un couple d'engrenages réalisant, par l'intermédiaire du coupleur, la transmission entre les deux vilebrequins.

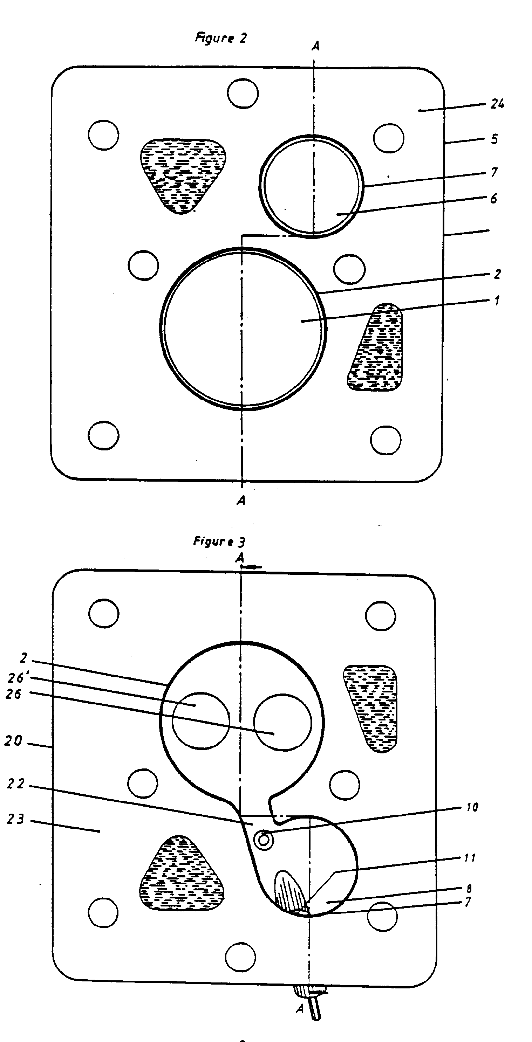

– la figure 2 est une vue en plan du plan de joint du carter cylindre reliant la culasse en deux coupes brisées à plans parallèles A-A.

– la figure 3 est une vue en plan du plan de joint de la culasse reliant le carter cylindre en deux coupes brisées à plans parallèles A-A.

Conformément à l'invention, on a représenté aux dessins un moteur qui réunit parallèlement, côte à côte, les premier et deuxième cylindres (2),(7), de telle sorte que ces derniers se présentent obliquement sur le plan de joint du carter cylindre (5) par rapport aux lignes d'arbres des deux vilebrequins (4) et (13). Cette disposition a pour avantage de permettre l'enclavement des plans de rotation des deux manetons, de telle façon que le plan de rotation du maneton du premier vilebrequin (4) s'insère à côté du plan de rotation du maneton du deuxième vilebrequin (13). Les orifices inférieurs des deux cylindres (2),(7) servant de passage à leur piston respectif (1),(6) sont situés dans le carter cylindre (5), face aux deux vilebrequins respectivement (4) et (13) et au carter d'huile moteur (14).

Cet enclavement a pour avantage de diminuer l'entraxe des deux vilebrequins (4),(13), de même que celui des deux cylindres (2),(7), ce qui a pour effet une réduction de l'encombrement du carter cylindre (5).

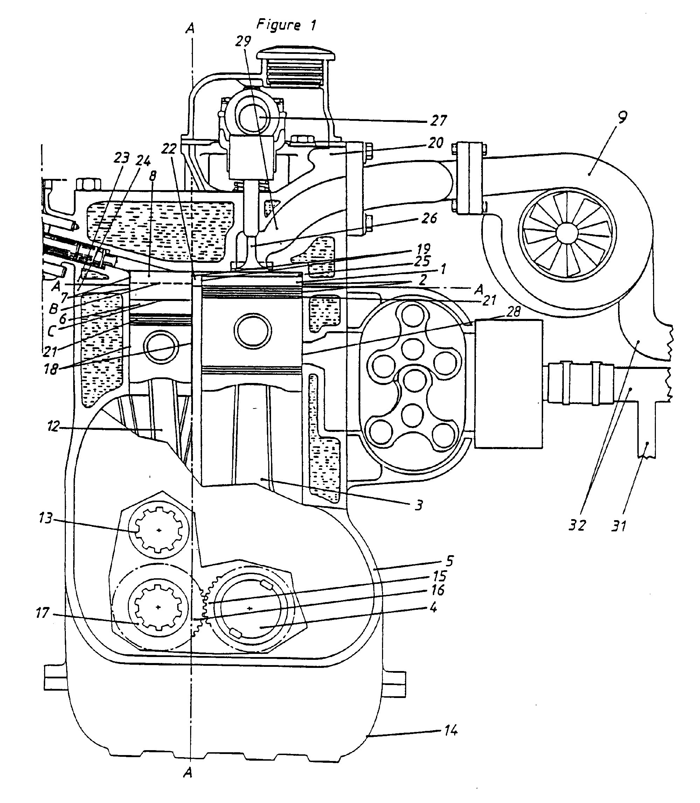

Suivant une forme de réalisation du moteur, où le coupleur se situe axialement à l'extérieur du carter cylindre (voir figure 1), celui-ci comprend des moyens pour que la transmission entre les deux vilebrequins (4) et (13) s'effectue par un couple d'engrenages (15) et (16) faisant partie du carter cylindre (5) ; le premier engrenage (15), axé sur l'arbre de sortie du premier vilebrequin (4), entraîne en rotation le deuxième engrenage (16).

Lors du montage du coupleur sur le carter cylindre (5), l'axe de transmission de l'engrenage d'entrée de la cage du coupleur devient solidaire de l'axe (17) du deuxième engrenage (16), tandis que l'axe de transmission de l'engrenage de sortie de la cage du coupleur devient solidaire de l'axe de sortie du deuxième vilebrequin (13), de sorte que les deux vilebrequins (4) et (13) forment une chaîne cinématique à même vitesse de rotation dans laquelle se situent également le coupleur et les moyens du coupleur pour permettre le déphasage angulaire entre les arbres des deux vilebrequins (4) et (13).

Il va de soi que cette forme de réalisation est représentée à titre d'exemple et n'est pas limitative.

Suivant une autre forme de réalisation de l'invention, le moteur à quatre temps peut aussi être prévu avec une chaîne cinématique où le vilebrequin (13) est à demi-vitesse du vilebrequin (4).

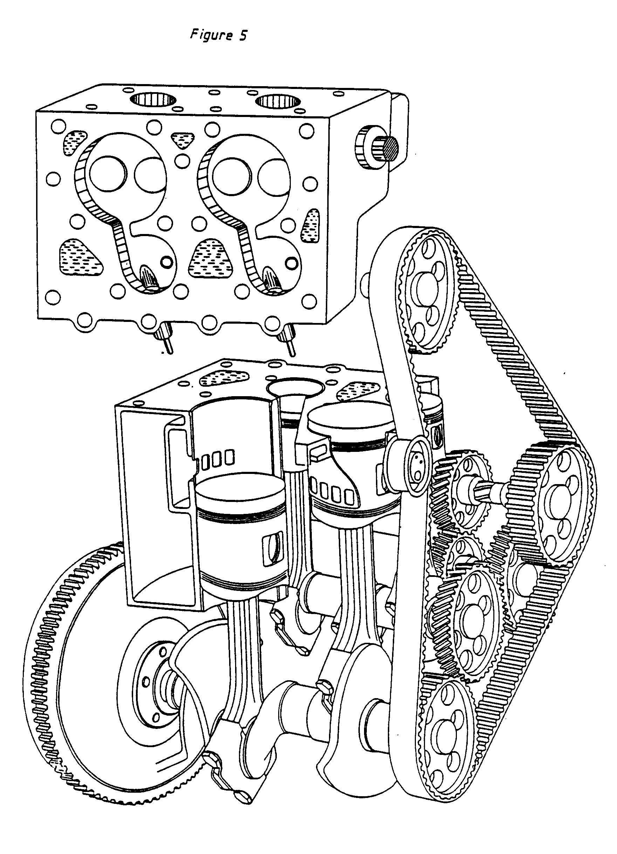

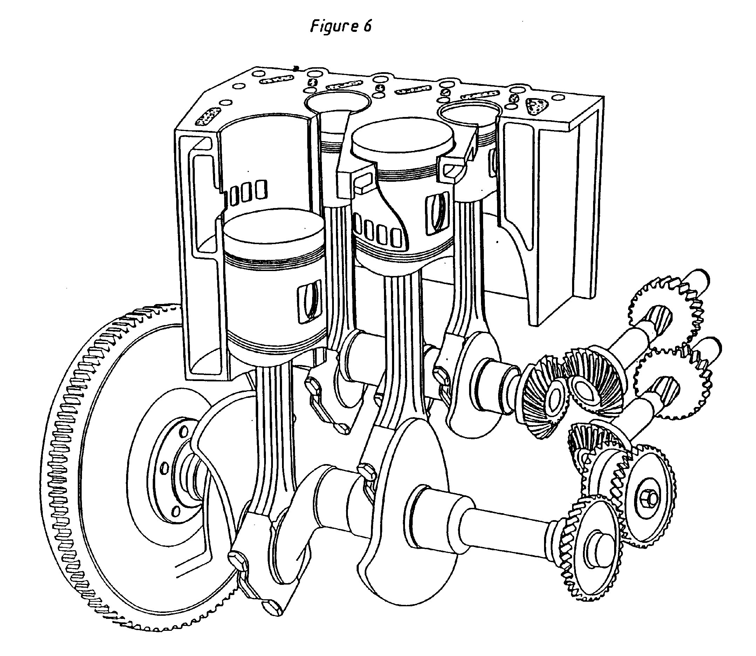

D'autres formes de réalisation de l'invention peuvent également être prévues, notamment lorsque le coupleur est disposé axialement ou radialement à l'intérieur du carter cylindre (5) ou radialement à l'extérieur du carter cylindre (5) (figures 5 et 6).

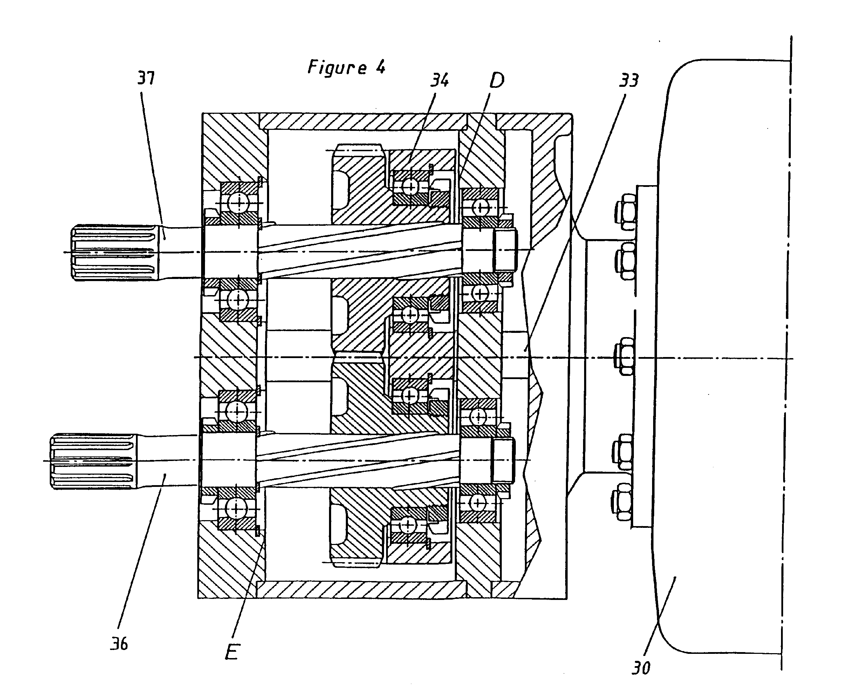

Lors de l'embranchement entre les deux axes de transmission du coupleur et les arbres des deux vilebrequins (4),(13), via l'axe intermédiaire (17), le calage se réalise de manière que le chariot (34) du coupleur occupe la première limite d'arrêt du glissement axial du chariot (34) (en position D, figure 4). L'axe d'entrée (36) plus long que l'axe de sortie (37) du coupleur est embranché sur l'axe du deuxième engrenage (16) avec la position du piston (1) du premier cylindre (2) situé au point mort haut, en phase fin de compression. L'axe de sortie (37) du coupleur est embranché sur l'axe du deuxième vilebrequin (13) lorsque le piston (6) du deuxième cylindre (7) est situé au point mort haut ou après le point mort haut.

Le positionnement du chariot (34) du coupleur à la première limite d'arrêt du glissement axial du chariot (34) réalise un déphasage angulaire des deux vilebrequins (4),(13), de manière à synchroniser cycliquement les positionnements du piston (6) (en position B, figure 1) de la préchambre de combustion (8), fin de compression, avec un plus grand rapport volumétrique.

Le positionnement du chariot (34) du coupleur à la deuxième limite d'arrêt de l'autre côté du glissement axial du chariot (34) (en position E, figure 4) réalise un autre déphasage angulaire des deux vilebrequins (4),(13), de manière à synchroniser cycliquement les positionnements du piston (6) (en position C, figure 1) de la préchambre de combustion (8), en fin de compression, avec un plus petit rapport volumétrique. Il résulte de chaque position du chariot (34) du coupleur, entre les première et deuxième limites d'arrêt, un rapport volumétrique différent.

Suivant l'invention, des moyens sont prévus pour synchroniser et automatiser le déplacement axial du chariot (34) du coupleur en fonction de la pression de suralimentation (figure 4).

Suivant un mode de réalisation du moteur, suivant l'invention, un vérin pneumatique (30) est relié par une tuyauterie (31) à la conduite de suralimentation (32) entre le moteur et le turbocompresseur (9). Le vérin pneumatique (30) (figure 4) est équipé d'un piston sous tension d'un ressort taré, ledit piston communiquant à l'extérieur du vérin (30) par un axe (33) solidaire du chariot (34) du coupleur, de telle manière que la pression de suralimentation dans le vérin (30) puisse agir sur le piston et le chariot (34) du coupleur, jusqu'au moment où la contraction du ressort taré équilibre la pression de suralimentation.

Suivant l'invention, des moyens sont aussi prévus pour faire varier la butée de la pompe d'injection déterminant le débit maximum de carburant par rapport au rapport volumétrique du moteur. A cet effet, la butée précitée est reliée à l'axe du piston pneumatique (33) solidaire du chariot (34) du coupleur par des moyens soit mécaniques, électriques ou autres, de telle manière que les déplacements du piston pneumatique engendrés par les pressions de suralimentation fassent varier simultanément le rapport volumétrique et ladite butée. Cette dernière est réglée pour permettre une augmentation du débit maximum de carburant de façon proportionnelle à la diminution du rapport volumétrique. Ces moyens sont destinés, en cas d'arrêt accidentel du vérin pneumatique (30), à bloquer la butée précitée avec le chariot (34) du coupleur, limitant ainsi la pression de suralimentation et, à fortiori, la pression maximale de combustion.

Suivant les moyens d'assemblage des deux cylindres (2),(7), chaque cylindre est formé de deux éléments (18) et (19). Les premiers éléments (18) des cylindres (2),(7), ouverts aux deux extrémités sont soit alésés directement dans le carter cylindre (5), soit conçus en chemises rapportées pour être reçues dans des logements appropriés du carter cylindre (5), l'étanchéité étant réalisée par l'appui d'une collerette en haut des chemises, dans un logement prévu au plan de joint (24) du carter cylindre (5) ; les deuxièmes éléments (19) des cylindres (2),(7), fermés à l'extrémité opposée à la jointure des deux éléments (18,19), sont soit alésés directement dans la culasse (20), soit conçus en chemises rapportées pour être reçues dans des logements appropriés de la culasse (20), l'étanchéité étant réalisée par l'appui d'une collerette au bas des chemises, dans un logement prévu au plan de joint (23) de la culasse (20).

Les chemises rapportées du carter cylindre (5) et de la culasse (20) peuvent aussi être conçues en une seule pièce.

Lorsque les plans de joint (23) et (24) de la culasse (20) et du carter cylindre (5) sont réunis, les premiers et deuxièmes éléments (18, 19) se juxtaposent axialement pour former les deux cylindres (2),(7).

Lors du fonctionnement du moteur, la rotation du premier vilebrequin (4) assure au premier piston (1) un mouvement alternatif dans les premier et deuxième éléments (18 et 19) du premier cylindre (2). La rotation du deuxième vilebrequin (13) assure un mouvement alternatif du piston (6) dans les premier et deuxième éléments (18,19) du deuxième cylindre (7).

Pour la distribution, le fond du deuxième élément (19) du premier cylindre (2) comporte une tubulure d'échappement (29) aménagée dans la culasse (20), mettant en communication, via les deux soupapes (26), (26'), le cylindre (2). Les soupapes sont actionnées par un arbre à cames (27) et entraînées à même vitesse de rotation par l'un des deux vilebrequins (4) ou (13).

Des lumières d'admission (28) sont aménagées sur le pourtour du premier cylindre (2), de manière qu'elles soient découvertes ou masquées par le premier piston (1) du premier cylindre (2).

Suivant un mode de réalisation du moteur, suivant l'invention, l'espace libéré de la culasse (20) permet de dégager un premier orifice pour la bougie de réchauffage (10) et un deuxième orifice pour l'injecteur de carburant (11) (figure 3).

Suivant l'invention, des moyens sont prévus sur le positionnement des deux vilebrequins (4),(13) situés dans le bloc carter cylindre (5), de manière à faire émerger cycliquement les têtes des deux pistons (1), (6), sans leur segmentation (21), au-delà des premiers éléments (18) des deux cylindres (2),(7) du carter cylindre (5), l'émergence des têtes des deux pistons (1),(6) correspondant avec l'espace réservé des deuxièmes éléments (19) des deux cylindres (2),(7) de la culasse (20).

Conformément à l'invention, des moyens sont aussi prévus par un évidement (22) pratiqué dans le plan de joint (23) de la culasse (20) ; cet évidement est situé entre les deux cylindres (2),(7) et se prolonge jusqu'au travers et à la profondeur des parois des deuxièmes éléments (19) des deux cylindres (2),(7), pour former un canal de communication (22) entre la chambre de précombustion (8) du deuxième cylindre (7) et l'espace mort (25) du premier cylindre (2), lorsque les plans de joint (23) et (24) de la culasse (20) et du carter cylindre (5) sont réunis. Le canal de communication (22) est prévu avec un branchement à large section pour faciliter les transferts massifs du fluide à haute fréquence entre les deux cylindres (2),(7) dans les phases de compression, combustion et détente des gaz.

## Revendications

1. Moteur à allumage par compression, à rapport volumétrique variable, comportant un groupement axial de deux cylindres (2,7) réunis parallèlement côte-à-côte avec deux vilebrequins (4,13) dans le carter cylindre (5), chaque cylindre (2,7) comportant un piston correspondant (1,6), le premier piston (1) servant aux phases d'admission, compression, détente et échappement et l'injecteur de carburant (11) étant situé dans le second cylindre (7), le premier piston (1) dépendant via une bielle (3) du premier vilebrequin (4) situé dans le carter cylindre (5) et le second piston (6) dépendant via une bielle (12) du second vilebrequin (13) situé dans le carter cylindre (5), le premier vilebrequin (4) est relié par une transmission au second vilebrequin (13) via les moyens de l'organe du coupleur situé radialement ou axialement à l'intérieur ou à l'extérieur du carter cylindre (5), le moteur comportant en outre un moyen de suralimentation (9), caractérisé en ce que des moyens sont prévus pour synchroniser et automatiser le déplacement axial du chariot (34) du coupleur en fonction de la pression de suralimentation.

2. Moteur suivant la revendication 1, caractérisé en ce que les premier et second cylindres (2,7) se présentent obliquement sur le plan de joint (24) du carter cylindre (5) par rapport aux lignes d'arbres des deux vilebrequins (4,13).

3. Moteur suivant les revendications 1 à 2, caractérisé en ce que, le coupleur étant situé à l'extérieur du carter cylindre (5), la transmission reliant le premier vilebrequin (4) au second vilebrequin (13) s'effectue par un couple d'engrenages (15, 16) faisant partie du carter cylindre (5), le premier engrenage (15), axé sur l'arbre de sortie du premier vilebrequin (4), entraînant en rotation le second engrenage (16).

4. Moteur suivant les revendications 1 à 4, caractérisé en ce qu'un vérin pneumatique (30) est relié par une tuyauterie (31) à la conduite de suralimentation (32) entre moteur et turbocompresseur (9), ledit vérin (30) étant équipé d'un piston mis sous tension par un ressort taré et communiquant à l'extérieur du vérin avec un axe (33) solidaire du chariot (34) du coupleur.

5. Moteur suivant les revendications 1 à 5, caractérisé en ce que des moyens mécaniques, électriques ou autres relient l'axe du piston pneumatique (33) à la butée de la pompe d'injection déterminant le débit maximum de carburant, de manière que les déplacements du piston pneumatique (33) engendrés par les pressions de suralimentation fassent varier simultanément le rapport volumétrique et ladite butée pour permettre une augmentation du débit maximum de carburant proportionnelle à la diminution du rapport volumétrique.

6. Moteur suivant les revendications 1 à 6, caractérisé en ce que des moyens sont prévus pour le positionnement des deux vilebrequins (4,13), de manière à faire émerger cycliquement la tête de chaque piston (1,6), sans leur segmentation (21), au-delà des premiers éléments (18) des deux cylindres (2,7) du carter cylindre (5), l'émergence des têtes des deux pistons (1,6) correspondant avec l'espace réservé des seconds éléments (19) des deux cylindres (2,7) de la culasse (20).

7. Moteur suivant les revendications 1 à 6, caractérisé en ce que des moyens sont prévus pour former un canal de communication (22) entre la chambre de précombustion (8) du second cylindre (7) et le premier cylindre (2), lorsque les plans de joint (23,24) de la culasse (20) et du carter cylindre (5) sont réunis.

**Patentansprüche**

1. Verbrennungsmotor mit Kompressionszündung und veränderlichem Verdichtungsverhältnis, der eine axiale Gruppierung von zwei, parallel Seite an Seite mit zwei Kurbelwellen (4, 13) im Zylindergehäuse (5) angeordneten Zylindern (2, 7) aufweist, wobei in jedem Zylinder (2, 7) ein entsprechender Kolben (1, 6) angeordnet ist, der erste Kolben (1) den Einlaß-, Verdichtungs-, Expansions- und Auslaßtakt bestimmt, die Kraftstoffeinspritzdüsen (11) im zweiten Zylinder (7) angeordnet sind, der erste Kolben (1) mit der ersten, im Zylindergehäuse (5) angeordneten Kurbelwelle (4) über ein Pleuel (3) verbunden ist, der zweite Kolben (6) mit der zweiten, im Zylindergehäuse (5) angeordneten Kurbelwelle (13) über ein Pleuel (12) verbunden ist, die erste Kurbelwelle (4) mit der zweiten Kurbelwelle (13) über ein Getriebe mittels des radial oder axial innerhalb oder außerhalb des Zylindergehäuses (5) angeordneten Kupplungselements verbunden ist und der Motor des weiteren Mittel zur Aufladung (9) aufweist, dadurch gekennzeichnet, daß Mittel zur synchronen und automatischen axialen Verschiebung des Schlittens (34) des Kupplungselements in Abhängigkeit vom Ladedruck vorgesehen sind.

2. Motor nach Anspruch 1, dadurch gekennzeichnet, daß der erste und zweite Zylinder (2, 7) mit Bezug auf die Achsen der beiden Kurbelwellen (4, 13) schräg auf der Dichtfläche (24) des Zylindergehäuses (5) liegen.

3. Motor nach den Ansprüchen 1 bis 2, dadurch gekennzeichnet, daß die Kupplung außerhalb des Zylindergehäuses (5) angeordnet ist und das die erste Kurbelwelle (4) mit der zweite Kurbelwelle (13) verbindenden Getriebe aus einem Zahnradpaar (15, 16) besteht, das im Zylindergehäuse (5) angeordnet ist und wovon das erste Zahnrad (15), das auf dem Ausgangswellenteil der ersten Kurbelwelle (4) zentriert ist, das zweite Zahnrad (16) in Drehung versetzt.

4. Motor nach den Ansprüchen 1 bis 3, dadurch gekennzeichnet, daß eine pneumatische Kolben-Zylinder-Einheit (30) über ein Verbindungsrohr (31) mit dem Aufladekanal (32) zwischen dem Motor und dem Turbolader (9) in Verbindung steht und die Kolben-Zylinder-Einheit (30) mit einem unter dem Druck einer vorgespannten Feder stehenden Kolben versehen ist, von dem eine Druckstange (33), die am Schlitten (34) der Kupplung befestigt ist, nach außerhalb der Kolben-Zylinder-Einheit geführt ist.

5. Motor nach den Ansprüchen 1 bis 4, dadurch gekennzeichnet, daß die Druckstange (33) des pneumatischen Kolbens durch mechanische, elektrische oder andere Mittel mit dem die Höchstmenge des Kraftstoffs bestimmenden Anschlag der Einspritzpumpe verbunden ist, derart, daß die durch den Ladedruck hervorgerufenen Verschiebungen des pneumatischen Kolbens (33) gleichzeitig das Verdichtungsverhältnis und den Anschlag verändern, um eine Erhöhung der größtmöglichen Kraftstoffmenge proportional zur Herabsetzung des Verdichtungsverhältnisses zu bewirken.

6. Motor nach den Ansprüchen 1 bis 5, dadurch gekennzeichnet, daß Mittel zum Positionieren der beiden Kurbelwellen (4, 13) vorgesehen sind, derart, daß die Kolbenböden eines jeden Kolbens (1, 6) mit Ausnahme ihres Kolbenringsatzes (21) zyklisch aus den ersten Elementen (18) der beiden Zylinder (2, 7) des Zylindergehäuses (5) herausragen, wobei der herausragende Bereich der Böden der beiden Kolben (1, 6) dem für die zweiten Elemente (19) der beiden Zylinder (2, 7) im Zylinderkopf (20) vorgesehenen Bereich entspricht.

7. Motor nach den Ansprüchen 1 bis 6, dadurch gekennzeichnet, daß Mittel vorgesehen sind, die einen Verbindungskanal (22) mit der Vorkammer (8) des zweiten Zylinders (7) und dem ersten Zylinder (2) bilden, wenn die Dichtflächen (23, 24) des Zylinderkopfs (20) und des Zylindergehäuses (5) aufeinanderliegen.

**Claims**

1. An engine featuring compression ignition, with a variable volumetric ratio, comprising an axial grouping of two cylinders, (2, 7) connected in parallel and side by side with two crank shafts (4, 13) in the cylinder housing (5), each cylinder (2, 7) comprising a corresponding piston (1, 6), the first piston (1) serving for the inlet, compression, expansion and exhaust phases, the fuel injector (11) being situated in the second cylinder (7), the first piston (1) being, through a connecting rod (3), subject to the action of the first crank shaft (4) situated in the cylinder housing (5) while the second piston (6) is, through a connecting rod (12), subject to the action of the second crank shaft (13) situated in the cylinder housing (5), the first crank shaft (4) being connected by a transmission to the second crank shaft (13) via clutch means situated radially or axially inside or outside the cylinder housing (5), the engine furthermore comprising supercharging means (9), characterised in that means are provided for synchronising and automating the axial displacement of the clutch carriage (34) as a function of the supercharging pressure.

2. An engine according to Claim 1, characterised in that the first and second cylinders (2, 7) are disposed obliquely on the joint face (24) of the cylinder housing (5) in relation to the shaft lines of the two crank shafts (4, 13).

3. An engine according to Claims 1 to 2, characterised in that with the clutch being situated outside the cylinder housing (5), the transmission connecting the first crank shaft (4) the second crank shaft (13) is accomplished via a pair of gears (15, 16) forming part of the cylinder housing (5), the first gear (15), mounted on the output shaft of the first crank shaft (4), imparting a rotary drive to the second gear (16).

4. An engine according to Claims 1 to 3, characterised in that a pneumatic jack (30) is connected by pipe-work (31) to the supercharging duct (32) between the engine and the turbo-compressor (9), the said jack (30) being equipped with a piston tensioned by a calibrated spring and communicating, on the outside of the jack, with a spindle (33) rigid with the clutch carriage (34).

5. An engine according to Claims 1 to 4, characterised in that mechanical, electrical or other means connect the spindle of the pneumatic piston (33) to the injection pump abutment which determines the maximum rate of flow of fuel so that displacements of the pneumatic piston (33) engendered by supercharging pressures simultaneously produce a variation in volumetric ratio and the said abutment to allow an increase in the maximum rate of flow of fuel in proportion to the reduction in volumetric ratio.

6. An engine according to Claims 1 to 5, characterised in that means are provided for positioning the two crank shafts (4, 13) so that the head of each piston (1, 6), without the ring portion (21), is caused to emerge cyclically beyond the first elements (18) of the two cylinders (2, 7) in the cylinder housing (5), the emergence of the heads of the two pistons (1, 6) corresponding to the space reserved for the second elements (19) of the two cylinders (2, 7) in the cylinder head (20).

7. An engine according to Claims 1 to 6, characterised in that means are provided for forming a communicating passage (22) between the pre-combustion chamber (8) of the second cylinder (7) and the first cylinder (2) when the joint faces (23, 24) of the cylinder head (20) and of the cylinder housing (5) are joined.

Figure 1

Figure 2

Figure 3

Figure 4

Figure 5

Figure 6